(19) Europäisches Patentamt
European Patent Office
Office européen des brevets

(11) Veröffentlichungsnummer: **0 429 957 B1**

# (12) EUROPÄISCHE PATENTSCHRIFT

(45) Veröffentlichungstag der Patentschrift: **17.05.95**

(21) Anmeldenummer: **90121790.1**

(22) Anmeldetag: **14.11.90**

Die Akte enthält technische Angaben, die nach dem Eingang der Anmeldung eingereicht wurden und die nicht in dieser Patentschrift enthalten sind.

(51) Int. Cl.[6]: **C08L 69/00**, C08L 25/12, //(C08L69/00,25:12,51:04,51:00), (C08L25/12,69:00,51:04,51:00)

(54) **Thermoplastische Formmassen mit hoher Kältezähigkeit.**

(30) Priorität: **25.11.89 DE 3939046**

(43) Veröffentlichungstag der Anmeldung: **05.06.91 Patentblatt 91/23**

(45) Bekanntmachung des Hinweises auf die Patenterteilung: **17.05.95 Patentblatt 95/20**

(84) Benannte Vertragsstaaten: **BE DE ES FR GB IT NL**

(56) Entgegenhaltungen:
EP-A- 0 089 540
EP-A- 0 206 006
EP-A- 0 367 052
WO-A-90/10674
DE-A- 2 901 576

(73) Patentinhaber: **BASF Aktiengesellschaft Carl-Bosch-Strasse 38 D-67063 Ludwigshafen (DE)**

(72) Erfinder: **Neumann, Rainer, Dr. Mozartstrasse 2b W-6704 Mutterstadt (DE)**
Erfinder: **Baumgartner, Ehrenfried, Dr. Goethestrasse 1 W-6701 Roedersheim-Gronau (DE)**
Erfinder: **Benker, Klaus Fuerstenweg 52 W-6730 Neustadt (DE)**
Erfinder: **Ruppmich, Karl Koenigsbacher Strasse 134 W-6700 Ludwigshafen (DE)**

**Beschreibung**

Die Erfindung betrifft thermoplastische Formmassen, nämlich Mischungen aus Polycarbonat und wenigstens drei weiteren Polymeren:

einem Styrol-Acrylnitrilmisch(co-)polymeren mit einem AN-Gehalt von unter 30 %,
einem agglomerierten Polybutadienpfropfkautschuk mit S/AN bzw. S-MMA-Hülle, sowie
einem grobteiligen Acrylatpfropfkautschuk.

Solche Mischungen aus mehreren unterschiedlichen Polymeren sind z.B. bekannt aus

(1) DE-A-3 521 407
(2) DE-A-3 735 754
(3) EP-A-244 856
(4) DE-A-2 901 576

Außerdem sind die folgenden Druckschriften zu erwähnen:

(5) DE-A-2 037 419
(6) DE-A-2 259 564
(7) DE-A-3 210 284

In (1) sind Mischungen aus Polycarbonat (PC), 2 Pfropfmischpolymerisaten, sowie eine Hartmatrix bildenden Mischpolymerisaten beschrieben, wobei die Pfropfmischpolymerisate in Masse oder Emulsion erzeugt werden können, mittlere Teilchendurchmesser von 0,09 bis 5 $\mu$m aufweisen, aber unterschiedliche Pfropfgrade aufweisen.

In (2) sind Formmassen aus PC und Acrylnitril/Butadien/Styrol-Polymeren (ABS) beschrieben, wobei eine Mischung aus kleinteiligen (0,05 bis 0,5 $\mu$m) Emulsionspolymerisaten und grobteiligen (0,8 bis 5 $\mu$m) Lösungspolymerisaten eingesetzt wird.

Schließlich wird in (3) die Verwendung zweier Pfropfkautschuke mit einer mittleren Teilchengröße von 50 bis 100 nm und 200 bis 700 nm in Mischungen aus Polycarbonat und Styrol/Acrylnitril-Copolymeren (SAN) beschrieben.

Die in (4) beschriebenen PC-freien Mischungen, die eine gute Schlagzähigkeit bei tiefen Temperaturen aufweisen, bestehen aus einem Polybutadienpfropfkautschuk mit einer mittleren Teilchengröße von 0,2 bis 0,45 $\mu$m und einem Acrylatkautschuk mit einer mittleren Teilchengröße von 0,05 bis 0,15 $\mu$m.

PC/ABS-Mischungen sind seit langem bekannt (DE-C-11 70 141 und 18 10 993). Sie besitzen im allgemeinen eine gute Zähigkeit bei tiefen Temperaturen, sind jedoch hinsichtlich ihrer Witterungsstabilität und Vergilbungsbeständigkeit unbefriedigend.

Eine verbesserte Witterungsstabilität wird bei PC/ASA-Mischungen erreicht, wie sie z.B. in (5), (6) und (7) beschrieben werden. Nachteilig ist allerdings deren mangelnde Tieftemperaturzähigkeit aufgrund der hohen Glastemperatur des Acrylatkautschuks.

Es bestand daher die Aufgabe, Formmassen aus Polycarbonat und schlagzäh modifizierten Styrol-Acrylnitrilpolymerisaten zur Verfügung zu stellen, die neben einer hervorragenden Tieftemperaturkerbschlagzähigkeit eine gute Witterungsbeständigkeit und Vergilbungsbeständigkeit besitzen.

Es wurde gefunden, daß diese Aufgabe gelöst wird durch eine Formmasse, die im wesentlichen enthält
- bezogen auf die Summe aus A + B + C + D -

A: 20 bis 80 Gew.-% eines Polycarbonats A,

B: 10 bis 60 Gew.-% eines thermoplastischen Mischpolymerisats B aus - jeweils bezogen auf B -

$b_1$: 70 bis 90 Gew.-% einpolymerisierten Einheiten $b_1$ des Styrols, $\alpha$-Methylstyrols oder eines kernalkylierten Styrols

$b_2$: 10 bis 30 Gew.-% einpolymerisierten Einheiten $b_2$ des (Meth)acrylnitrils

C: 5 bis 30 Gew.-% eines Pfropfmischpolymerisats C aus - jeweils bezogen auf C -

$c_1$: 20 bis 60 Gew.-% eines Polybutadienkautschuks $c_1$

$c_2$: 80 bis 40 Gew.-% einer darauf gepfropften Hülle $c_2$ aus - jeweils bezogen auf $c_2$ entweder

$c_{21}$: 70 bis 90 Gew.-% einpolymerisierten Einheiten $c_{21}$ des Styrols und

$c_{22}$: 10 bis 30 Gew.-% einpolymerisierten Einheiten $c_{22}$ des (Meth)acrylnitrils

oder

$c_{23}$: 15 bis 40 Gew.-% einpolymerisierten Einheiten $c_{23}$ des Styrols,

$c_{24}$: 85 bis 60 Gew.-% einpolymerisierten Einheiten $c_{24}$ des Methylmethacrylats und

$c_{25}$: bis zu 3 Gew.-% einpolymerisierten Einheiten $c_{25}$ des Glycidylmethacrylats

D: 5 bis 30 Gew.-% eines Pfropfmischpolymerisats D aus - jeweils bezogen auf D -

$d_1$: 20 bis 60 Gew.-% eines vernetzten Acrylatkautschuks $d_1$

$d_2$: 80 bis 40 Gew.-% einer darauf gepfropften Hülle $d_2$ aus, jeweils bezogen auf $d_2$

$d_{21}$: 70 bis 90 Gew.-% Styrol $d_{21}$ und

2

$d_{22}$: 10 bis 30 Gew.-% (Meth)acrylnitril $d_{22}$,

mit der Maßgabe, daß das Pfropfmischpolymerisat C einen mittleren Teilchendurchmesser von 0,2 bis 0,5 $\mu$m und das Pfropfmischpolymerisat D einen mittleren Teilchendurchmesser von 0,4 bis 0,7 $\mu$m aufweist, jeweils bestimmt als $d_{50}$-Hert der integralen Masseverteilung.

Polycarbonat A

Als Polycarbonate (Komponente A) können die bekannten Polycarbonate verwendet werden. Unter Polycarbonat A im Sinne der Erfindung werden Polycarbonate auf der Basis von Homopolycarbonaten und Copolycarbonaten von Bisphenolen verstanden. Als Bisphenole kommen dabei beispielsweise in Frage: Dihydroxydiphenyle, Bis-(hydroxyphenyl)-alkane, Bis-(hydroxyphenyl)ether. Es können aber auch alle anderen, für die Herstellung von Polycarbonaten geeigneten Bisphenole eingesetzt werden, wie sie u.a. in der Monographie H. Schnell, Chemistry and Physics of Polycarbonates, Interscience Publishers, New York, 1964, sowie in der US-PS 2 999 835 und in der DE-A 22 48 817 beschrieben sind. Besonders bevorzugt sind Polycarbonate auf der Basis von 2,2-Bis-(4-hydroxyphenyl)propan (Bisphenol A). Die Synthese der Polycarbonate wird beispielsweise in der US-PS 2 999 835 und der GB-PS 772 627 beschrieben.

Die besten Polycarbonate A besitzen im allgemeinen ein mittleres Molekulargewicht $M_w$ im Bereich von 25.000 bis 200.000, bestimmt durch Lichtstreuung.

Die Formmasse enthält 20 bis 80 Gew.-%, bevorzugt 40 bis 80 Gew.-% der Komponente A, bezogen auf die Summe aus A bis D.

Copolymerisate B

Es werden Styrol-(Meth)acrylnitril-Copolymerisate verwendet. Diese bestehen im wesentlichen aus 70 bis 90 Gew.-% Styrolmonomeren ($b_1$) und aus 10 bis 30 Gew.-% aus (Meth)acrylnitril.

Liegt der (Meth)acrylnitrilgehalt außerhalb des bevorzugten Bereichs, so werden Formmassen mit unbefriedigender Zähigkeit erhalten.

Als Styrolmonomere wird bevorzugt Styrol verwendet. Das Styrol kann, um die Wärmeformbeständigkeit zu verbessern, ganz oder teilweise durch $\alpha$-Methylstyrol oder kernalkyliertes Styrol, insbesondere p-Methylstyrol, ersetzt sein. Die besonders bevorzugt angewendeten Styrol-Acrylnitril-Copolymerisate sind im Handel erhältlich und können z.B. nach der DE-AS 10 10 001 oder DE-PS 1 003 436 hergestellt werden. Der Molekulargewichtsbereich der Copolymerisate kann z.B. 80,000 bis 500,000 (Gewichtsmittel $M_w$ aus Lichtstreuung) betragen.

Die Formmasse besteht - bezogen auf die Summe aus A-D - zu 10 bis 60 Gew.-%, vorzugsweise 10 bis 50 Gew.-% aus der Komponente B.

Pfropfmischpolymerisat C

Diese Pfropfmischpolymerisate sind aufgebaut, jeweils bezogen auf C aus einem Polybutadienkautschuk $c_1$ als Elastomerkomponente, der 20 bis 60 Gew.-% ausmacht und einer darauf gepfropften Hülle $c_2$ die 80 bis 40 Gew.-% ausmacht. Als Kautschuk kommen Polybutadien (vgl. DE-A-14 20 775 und DE-A-14 95 089) und Copolymerisate aus Polybutadien und Styrol in Betracht (vgl. GB-PS 649 166). Der Kautschuk $c_1$ soll eine Glastemperatur (nach K.H. Illers und H. Breuer, Kolloid-Z. 167, (1961), Seite 110) haben die unter -40°C, bevorzugt unter -60°C liegt.

Die Pfropfhülle $c_2$ ist entweder aufgebaut aus - jeweils bezogen auf $c_2$ -70 bis 90 Gew.-% Styrol, $\alpha$-Methylstyrol oder einem kernalkyliertem Styrol $c_{21}$ und 10 bis 30 Gew.-% (Meth)acrylnitril $c_{22}$ oder aus 15 bis 40 Gew.-% Styrol $c_{23}$ und 85 bis 60 Gew.-% Methylmethacrylat $c_{24}$ und, wenn gewünscht, bis zu 3 Gew.-% Glycidylmethacrylat $c_{25}$. Es können somit wahlweise die Pfropfcopolymerisate C aufgebaut sein aus $c_1$, $c_{21}$ und $c_{22}$, oder aus $c_1$, $c_{23}$ und $c_{24}$ sowie eventuell $c_{25}$; natürlich können auch Mischungen dieser Pfropfcopolymerisate eingesetzt werden.

Das Pfropfmischpolymerisat C ist in den Formmassen zu 5 bis 30 Gew.-%, bevorzugt 5 bis 20 Gew.-% enthalten.

Die Pfropfmischpolymerisation kann wie bekannt in Lösung, Suspension oder vorzugsweise in Emulsion erfolgen. Die Weichphase des Pfropfmischpolymerisats weist, bei der bevorzugten Herstellung des Kautschuks und der Pfropfung in Emulsion, einen mittleren Teilchendurchmesser ($d_{50}$-Wert der integralen Masseverteilung) von 0,08 $\mu$m auf. Durch Vergrößerung der Teilchen, z.B. durch Agglomeration oder bei der Gewinnung der Emulsion im Wege des Saatlatex-Verfahrens, wird der $d_{50}$-Wert im Bereich von 0,2 bis 0,5 $\mu$m eingestellt. Bei solchen Pfropfcopolymerisationen erfolgt eine zumindest teilweise chemische

3

Verknüpfung der polymerisierenden Monomeren mit dem bereits polymerisierten Kautschuk, wobei die Verknüpfung wahrscheinlich an den im Kautschuk enthaltenden Doppelbindungen erfolgt. Zumindest ein Teil der Monomeren ist also auf den Kautschuk gepfropft, also durch covalente Bindungen an den Kautschuk-Fadenmolekülen gebunden.

Die Pfropfung kann auch mehrstufig erfolgen, indem zuerst ein Teil der die Pfropfhülle bildenden Monomere aufgepfropft wird und anschließend der Rest.

Die Art des Verfahrens ist unkritisch, solange die Zusammensetzung der Pfropfmonomeren die angegebenen Grenzen nicht verläßt und der Teilchendurchmesser der Pfropfmischpolymerisate im Bereich von 0,200 $\mu$m bis 0,5 $\mu$, bevorzugt 0,2 bis 0,4 $\mu$m liegt.

Pfropfcopolymerisat D

Diese Pfropfmischpolymerisate sind aufgebaut - jeweils bezogen auf D - aus einem vernetzten Acrylatkautschuk $d_1$ als Elastomerkomponente, der aus einer Monomerenmischung aus, bezogen auf $d_1$
70 bis 99,9 Gew.-% mindestens eines Alkylacrylats mit 1 bis 8 Kohlenstoffatomen im Alkylrest
0 bis 30 Gew.-% mindestens eines copolymerisierbaren, monoethylenisch ungesättigten Monomeren
und 0,1 bis 5 Gew.-% eines copolymerisierbaren, polyfunktionellen vernetzenden Monomeren polymerisiert wird und aus einer darauf gepfropften Hülle $d_2$.

Die Elastomerkomponente macht 20 bis 60 Gew.-%, die Pfropfhülle entsprechend 80 bis 40 Gew.-% des Pfropfmischpolymerisats aus. Die Herstellung des Pfropfmischpolymerisats kann beispielsweise nach der in der DE-PS 12 60 135 beschriebenen Methode erfolgen. Die Pfropfhülle $d_2$ ist aufgebaut aus, jeweils bezogen auf $c_2$, 70 bis 90 Gew.-% Styrol $d_{21}$ und 10 bis 30 Gew.-% (Meth)acrylnitril $d_{22}$.

Das Pfropfcopolymerisat D ist in den Formmassen zu 5 bis 30 Gew.-%, bevorzugt 5 bis 20 Gew.-% enthalten.

Der Aufbau der Pfropfhülle kann ein- oder zweistufig erfolgen, wobei ein zweistufiger Aufbau bevorzugt wird. Im Falle des einstufigen Aufbaus wird ein Gemisch der Monomeren $d_{21}$ und $d_{22}$ in dem gewünschten Gew.-Verhältnis im Bereich 70 : 30 bis 90 : 10 in Gegenwart des Elastomeren $d_1$ in bekannter Weise polymerisiert (vgl. DE-OS 28 26 925), vorzugsweise in Emulsion.

Im Falle des zweistufigen Aufbaus der Pfropfhülle $d_2$ macht die erste Stufe 20 bis 70 Gew.-%, vorzugsweise 25 bis 50 Gew.-%, bezogen auf $d_2$ aus. Zu ihrer Herstellung wird nur Styrol verwendet.

Die 2. Stufe der Pfropfhülle macht 30 bis 80 Gew.-%, insbesondere 50 bis 75 Gew.-%, bezogen auf $d_2$ aus. Zu ihrer Herstellung werden Mischungen aus Styrol und (Meth)acrylnitril verwendet. Die Bedingungen der Polymerisation sind so zu wählen, daß die Teilchengröße des ASA-Polymerisats im Bereich von 0,4 bis 0,7 $\mu$m, vorzugsweise 0,4 bis 0,6 $\mu$m liegen. Vorzugsweise wird ein Saatlatexverfahren verwendet.

Zusatz- und Hilfsstoffe E

Die thermoplastische Formmasse kann, bezogen auf 100 Gew.-Teile A + B + C + D noch übliche Zusatzstoffe in Mengen von z.B. 0,1 bis 40 Gew.-Teilen enthalten. Dies sind z.B. Füllstoffe, Farbstoffe, Pigmente, Antistatika, UV-Stabilisatoren oder Wärmestabilisatoren, Verstärkungsmittel wie Glasfasern, Antioxidantien, auch Flammschutzmittel und deren Synergisten und insbesondere Schmiermittel. Andere für SAN-Polymerisate und Pfropfmischpolymerisate bzw. Polycarbonate übliche Zusatzstoffe können enthalten sein.

Von den Schmiermitteln sind insbesondere diejenigen auf Basis von Ethylen- und Propylenoxid aufgebauten Pluriol®-Marken zu nennen. Als Flammschutzmittel können insbesondere die in der DE-A-34 36 815 genannten Mittel verwendet werden, wobei insbesondere Poly(tetrabrombisphenol-A-(glycidyl-)ether mit einem Molekulargewicht von 40 000 bevorzugt wird (Produkt F 2400 von Makteshim).

Herstellung der Formmassen

Die Bestandteile werden auf übliche Weise gemischt. Vorzugsweise geschieht jedoch das Mischen durch gemeinsames Extrudieren, Kneten oder Verwalzen, wobei die Bestandteile, wenn nötig zuvor aus ihrer Lösung oder wäßriger Dispersion isoliert worden sind. Die in wäßriger Dispersion vorliegenden Produkte der Pfropfmischpolymerisation können aber auch teilweise entwässert oder direkt als Dispersion mit B und dann mit A und gegebenenfalls mit E vermischt werden, wobei erst während der Vermischung die vollständige Trocknung geschieht.

Eine besonders homogene Verteilung der Weichphase in der Hartmatrix erzielt man bevorzugt dadurch, daß man zunächst eine Schmelze des harten Polymerisats B mit den Pfropfmischpolymerisaten bei Temperaturen über 200 °C intensiv vermischt.

Hierzu werden, z.B. in einem Extruder mit Vakuumentgasung, die gefällten Pfropfmischpolymerisate C + D, die einen Restwassergehalt von 10 bis 40 Gew.-% aufweisen, bei einer Temperatur über 180 °C eingebracht und intensiv vermischt.

Das so erhaltene Granulat wird dann mit dem Polycarbonat gemischt und in einen zweiten Extrudierschritt oberhalb von 220 °C homogenisiert.

Die erfindungsgemäße Formmasse kann mit den bekannten Verfahren der Thermoplastverarbeitung bearbeitet werden, also z.B. durch Extrudieren, Spritzgießen, Kalandrieren, Hohlkörperblasen, Pressen und Sintern; besonders bevorzugt werden aus den nach dem erfindungsgemäßen Verfahren hergestellten Formmassen Formteile durch Spritzgießen für den Automobilbau hergestellt.

Die nachstehend verwendeten Meßgrößen können wie folgt bestimmt werden:

1. die mittlere Teilchengröße und die Teilchengrößenverteilung werden aus der integralen Massenverteilung bestimmt. Bei den mittleren Teilchengrößen handelt es sich in allen Fällen um das Gewichtsmittel der Teilchengrößen wie sie mittels einer analytischen Ultrazentrifuge entsprechend der Methode von W. Scholtan und H. Lange, Kolloid Z. und Z. Polymere 250 (1972), Seiten 782 bis 790 bestimmt werden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser unter einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert.

2. Die Kerbschlagzähigkeit $a_K$ in [KJ/m$^2$] der Proben wird nach DIN 53 453 an bei 260 °C gespritzten Normkleinstäben bei -20 °C und -40 °C gemessen.

3. Die Witterungsbeständigkeit und Vergilbungsbeständigkeit wird an bei 260 °C gespritzten Rundscheiben bestimmt. Hierzu wurden die Rundscheiben bei 110 °C im Trockenschrank gelagert und nach 90 Stunden an je 5 Prüfkörpern die Durchstoßarbeit $W_{ges}$ nach DIN 53 443 bei Raumtemperatur bestimmt. Die Vergilbung wird visuell beurteilt.

4.
   a.) Die Viskositätszahl (VZ) des eingesetzten Polycarbonats wird in einer 0,5 %igen Lösung in Methylenchlorid gemessen;
   b.) Die VZ der Styrol-Acrylnitrilcopolymerisate wird 0,5 %ig in DMF gemessen.

Für die nachstehenden Beispiele wurden die folgenden Rohstoffe bereitgestellt:

Komponente A

Ein unter der Handelsbezeichnung Lexan ® erhältliches Polycarbonat auf Basis von Bisphenol A mit einer Viskositätszahl von 61,5 ml/g.

Komponente B1

Ein Styrol-Acrylnitrilcopolymer, hergestellt durch Lösungspolymerisation, mit einem Acrylnitrilgehalt von 19 Gew.-% und einer VZ von 70 ml/g.

Komponente B2

Ein Styrol-Acrylnitrilcopolymer hergestellt durch Lösungspolymerisation mit einem Acrylnitrilgehalt von 35 Gew.-% und einer VZ von 80 ml/g.

Komponente C1

Durch Polymerisation von 62 Gew.-Teilen Butadien in Gegenwart einer Lösung von 0,6 Gew.-Teilen tert.-Dodecylmercaptan, 0,7 Gew.-Teilen Natrium-alkylsulfonat als Emulgator, 0,2 Gew.-Teilen Kaliumperoxodisulfat und 0,2 Gew.-Teilen Natriumpyrophosphat in 80 Teilen Wasser wird bei 25 °C ein Polybutadienlatex (C') hergestellt, der nach einem Umsatz von 98 % eine mittlere Teilchengröße von 0,1 μm aufweist.

Nach Zusatz von 40 Gew.-Teilen Wasser, 0,4 Gew.-Teilen Natrium-alkylsulfonat, 0,25 Gew.-Teilen Kaliumperoxodisulfat und 0,4 Gew.-Teilen Natriumhydrogencarbonat werden 38 Gew.-Teile einer Mischung aus Styrol und Acrylnitril im Verhältnis 75 : 25 innerhalb von 4 Stunden zugeführt. Polymerisation bei 75 °C unter Rühren. Der Umsatz, bezogen auf Styrol und Acrylnitril ist schließlich praktisch quantitativ. Die erhaltene Pfropfkautschukdispersion wird mit Calciumchloridlösung gefällt und das abgetrennte Pfropfmischpolymerisat mit destilliertem Wasser gewaschen. Die mittlere Teilchengröße beträgt 0,11 $\mu$m.

Komponente C2

Der kleinteilige Polybutadienlatex C' wird durch Zusatz von 25 Gew.-Teilen einer 10 %igen wäßrigen Emulsion eines Copolymeren aus 96 Gew.-Teilen Ethylacrylat und 4 Gew.-Teilen Methacrylsäureamid agglomeriert.

In der gleichen Weise wie bei der Herstellung von C1 wird der erhaltene Latex mit Styrol und Acrylnitril im Verhältnis 75 : 25 gepfropft und ausgefällt. Die mittlere Teilchengröße beträgt 0,36 $\mu$m.

Komponente C3

Zunächst wird, wie vorstehend beschrieben, ein agglomerierter Polybutadienlatex hergestellt. Nach Zusetzen von 40 Gew.-Teilen Wasser, 0,9 Gewichtsteilen Natrium-alkylsulfonat, 0,4 Gew.-Teilen Natriumhydrogencarbonat und 0,3 Gew.-Teilen Kaliumperoxodisulfat wird 13 Gew.-Teile Styrol bei 70 bis 75°C innerhalb einer Stunde zudosiert. Nach Zulaufende werden innerhalb von 6 Stunden 35 Gew.-Teile einer Mischung aus Methylmethacrylat und Glycidylmethacrylat im Gewichtsverhältnis 99 : 1 zudosiert. Nach Zulaufende läßt man 3 Stunden nachreagieren und fällt aus. Der erhaltene Latex hat einen mittleren Teilchendurchmesser von 0,37 $\mu$m.

Komponente C4

Polybutadien wird in einer Mischung aus Styrol, Acrylnitril im Gewichtsverhältnis 75 : 25 und Ethylbenzol gelöst. Die Mischung wird unter starkem Rühren in einem kontinuierlichen Prozeß in drei hintereinander angeordneten Reaktoren mit steigendem Temperaturprofil polymerisiert. Während der Polymerisation polymerisiert ein Teil des Styrol/Acrylnitrilgemisches auf das Polybutadien und bildet das Pfropfpolymere C 4 während der Rest die Hartmatrix bildet. Das Polymerisationsprodukt wird entgast, extrudiert und anschließend granuliert.

Folgende Analysendaten wurden gefunden:

9,3 % Polybutadien, 68 % Styrol, 22,7 % Acrylnitril. Die Pfropfausbeute beträgt 8,3 %.

Der durch Auszählung der Teilchen auf den elektronenmikroskopischen Aufnahmen bestimmte mittlere Durchmesser beträgt 1,4 $\mu$m. Somit enthält das Produkt 17 % grobteiligen Pfropfkautschuk und 83 % SAN-Copolymerisat mit einer VZ von 84 ml/g.

Feinteiliges Pfropfmischpolymerisat D1

($d_1$) 16 Teile Butylacrylat und 0,4 Teile Tricyclodecyenylacrylat werden in 150 Teilen Wasser unter Zusatz von einem Teil des Natriumsalzes einer $C_{12}$-bis $C_{18}$-Paraffinsulfonsäure, 0,3 Teilen Kaliumpersulfat, 0,3 Teilen Natriumhydrogencarbonat und 0,15 Teilen Natriumpyrophosphat unter Rühren auf 60°C erwärmt. 10 Minuten nach dem Anspringen der Polymerisationsreaktion werden innerhalb von 3 Stunden eine Mischung aus 82 Teilen Butylacrylat und 1,6 Teilen Tricyclodecenylacrylat zugegeben. Nach Beendigung der Monomerzugabe läßt man noch eine Stunde nachreagieren. Der erhaltene Latex des vernetzten Butylacrylat-Polymerisats hat einen Feststoffgehalt von 40 Gew.-%. Die mittlere Teilchengröße (Gewichtsmittel) wird zu 0,076 $\mu$m ermittelt. Die Teilchengrößenverteilung war eng (Qotient Q = 0,29).

($d_2$) 150 Teile des nach ($d_1$) erhaltenen Polybutylacrylat-Latex werden mit 40 Teilen einer Mischung aus Styrol und Acrylnitril (Gewichtsverhältnis 75 : 25) und 60 Teilen Wasser gemischt und unter Rühren nach Zusatz von weiteren 0,03 Teilen Kaliumpersulfat und 0,05 Teilen Lauroylperoxid 4 Stunden auf 65°C erhitzt. Nach Beendigung der Pfropfmischpolymerisation wurde das Polymerisationsprodukt mittels Calciumchloridlösung bei 95°C aus der Dispersion gefällt, mit Wasser gewaschen und im warmen Luftstrom getrocknet. Der Pfropfgrad des Pfropfmischpolymerisats betrug 35 %, die Teilchengröße 0,09 $\mu$m.

Grobteiliges Pfropfmischpolymerisat D2

($c_1$) Zu einer Vorlage aus 1,5 Teilen des in der Stufe ($a_1$) dieses Beispiels hergestellten Latex läßt man nach Zugabe von 50 Teilen Wasser und 0,1 Teil Kaliumpersulfat im Verlauf von 3 Stunden einerseits eine Mischung aus 49 Teilen Butylacrylat und 1 Teil Tricyclodecenylacrylat und andererseits eine Lösung von 0,5 Teilen des Natriumsalzes einer $C_{12}$- bis $C_{18}$-Paraffinsulfonsäure in 25 Teilen Wasser bei 60°C zulaufen und polymerisiert 2 Stunden nach. Der erhaltene Latex des vernetzten Butylacrylat-Polymerisats hat einen Feststoffgehalt von 40 %. Die mittlere Teilchengröße (Gewichtsmittel des Latex) wird zu 0,43 $\mu$m ermittelt. Die Teilchengrößenverteilungist eng (Q = 0,1).

($c_2$) 150 Teile dieses Latex werden mit 20 Teilen Styrol und 60 Teilen Wasser gemischt und unter Rühren nach Zusatz von weiteren 0,03 Teilen Kaliumpersulfat und 0,05 Teilen Lauroylperoxid 3 Stunden auf 65°C erhitzt. Die bei dieser Pfropfmischpolymerisation erhaltene Dispersion wird dann mit 20 Teilen eines Gemisches aus Styrol und Acrylnitril im Verhältnis 75 : 25 weitere 4 Stunden polymerisiert. Das Reaktionsprodukt wird mittels Calciumchloridlösung bei 95°C aus der Dispersion ausgefällt, abgetrennt, mit Wasser gewaschen und im warmen Luftstrom getrocknet. Der Pfropfgrad des Pfropfmischpolymerisats wird zu 35 % ermittelt; die mittlere Teilchengröße der Latexteilchen beträgt 0,5 $\mu$m.

Komponente E1

Loxiol® G70 S, hochmolekularer mehrfunktioneller Fettsäureester

Komponente E2

Stabilisator aus 1 Teil Irganox® PS 800 und 1 Teil eines sterisch gehinderten Phenols.

Beispiele und Vergleichsbeispiele

Die in der Tabelle angegebenen Gewichtsteile der Komponenten A, B, C und D werden zusätzlich mit 0,1 Teilen Stabilisator (Komponente E2) und 0,5 Teilen Loxiol G70 S (Komponente E 1) auf einem handelsüblichen Doppelschneckenextruder granuliert. Aus dem getrockneten Granulat der Proben wurden die Formmassen für die Eigenschaftsprüfungen durch Spritzgießen hergestellt.

7

**Beispiele und Vergleichsbeispiele**

| | A | B 1 | B 2 | C 1 | C 2 | C 3 | C 4 | D 1 | D 2 | ak [kJ/m$^2$] −20°C | ak [kJ/m$^2$] −40°C | Wg [Nm] nach 90 Std. bei 110°C | Vergilbung nach 90 Std. bei 110°C |
|---|---|---|---|---|---|---|---|---|---|---|---|---|---|
| **Beisp.** | | | | | | | | | | | | | |
| 1 | 60 | 20 | – | – | 10 | – | – | – | 10 | 34 | 27 | 54 | leicht gelblich |
| 2 | 60 | 20 | – | – | – | 10 | – | – | 10 | 36 | 28 | 50 | leicht gelblich |
| 3 | 55 | 25 | – | – | 10 | – | – | – | 10 | 30 | 24 | 49 | leicht gelblich |
| 4 | 70 | 14 | – | – | – | 8 | – | – | 8 | 27 | 25 | 60 | leicht gelblich |
| **Vergl. beisp.** | | | | | | | | | | | | | |
| A | 60 | 20 | – | – | 10 | – | – | 10 | – | 21 | 4 | 54 | leicht gelblich |
| B | 60 | 20 | – | – | – | 10 | – | 10 | – | 22 | 8 | 49 | leicht gelblich |
| C | 60 | 20 | 20 | – | – | – | – | 10 | 10 | 9 | 3 | 54 | leicht gelblich |
| D | 60 | – | – | 10 | – | 10 | – | – | 10 | 3 | 1 | 10 | leicht gelblich |
| E | 60 | 20 | – | – | – | – | – | – | 10 | 23 | 16 | 40 | leicht gelblich |
| F | 60 | – | – | 10 | 10 | – | 30 | – | – | 30 | 21 | 25 | stark gelb |
| G | 60 | 20 | – | – | 10 | – | – | – | – | 37 | 29 | 20 | stark gelb |

Die Gegenüberstellung der Beispiele 1 und 2 und der Vergleichsversuche A und B verdeutlicht, daß im Gegensatz zur Lehre der DE 2 901 576 in PC-Blends durch die Kombination von grobteiligen Acrylatkautschuken und Polybutadienkautschuken eine vorteilhafte Eigenschaftskombination insbesondere in der Tieftemperaturzähigkeit erreicht wird. Dies zeigt, daß Erkenntnisse über zähmodifizierte Styrolcopolymerisate nicht ohne weiteres auf deren Mischungen mit Polycarbonat übertragen werden können.

Acrylatkautschuke (Vergleichsversuch C) alleine liefern nur unbefriedigende Kältezähigkeiten.

Der AN-Gehalt der Komponente B sollte den beanspruchten Bereich nicht überschreiten (Vergleichsversuch D).

Im Vergleichsversuch E wurde der erfindungsgemäße Butadienkautschuk durch einen kleinteiligen Polybutadienkautschuk ersetzt. Kerbschlagzähigkeit und Durchstoßarbeit sind deutlich geringer als bei den erfindungsgemäßen Formmassen.

Die Mischungen bei denen nur Butadienkautschuke verwendet werden (Vergleichsversuch F und G) sind erwartungsgemäß nach Wärmelagerung wesentlich stärker vergilbt und zeigen deutlich Einbußen in der Zähigkeit.

**Patentansprüche**

1. Thermoplastische Formmasse, enthaltend - bezogen auf die Summe aus $A + B + C + D$ -
   - A: 20 bis 80 Gew.-% eines Polycarbonats A;
   - B: 10 bis 60 Gew.-% eines thermoplastischen Mischpolymerisats B aus - jeweils bezogen auf B -
   - $b_1$: 70 bis 90 Gew.-% einpolymerisierten Einheiten $b_1$ des Styrols, $\alpha$-Methylstyrols oder eines kernalkylierten Styrols
   - $b_2$: 10 bis 30 Gew.-% einpolymerisierten Einheiten $b_2$ des (Meth)acrylnitrils;
   - C: 5 bis 30 Gew.-% eines Pfropfmischpolymerisats C aus - jeweils bezogen auf C -
   - $c_1$: 20 bis 60 Gew.-% eines Polybutadienkautschuks $c_1$
   - $c_2$: 80 bis 40 Gew.-% einer darauf gepfropften Hülle $c_2$ aus - jeweils bezogen auf $c_2$ -entweder
   - $c_{21}$: 70 bis 90 Gew.-% einpolymerisierten Einheiten $c_{21}$ des Styrols und
   - $c_{22}$: 10 bis 30 Gew.-% einpolymerisierten Einheiten $c_{22}$ des (Meth)acrylnitrils
     oder
   - $c_{23}$: 15 bis 40 Gew.-% einpolymerisierten Einheiten $c_{23}$ des Styrols,
   - $c_{24}$: 85 bis 60 Gew.-% einpolymerisierten Einheiten $c_{24}$ des Methylmethacrylats und
   - $c_{25}$: bis zu 3 Gew.-% einpolymerisierten Einheiten $c_{25}$ des Glycidylmethacrylats;
   - D: 5 bis 30 Gew.-% eines Pfropfmischpolymerisats D aus - jeweils bezogen auf D -
   - $d_1$: 20 bis 60 Gew.-% eines vernetzten Acrylatkautschuks $d_1$
   - $d_2$: 80 bis 40 Gew.-% einer darauf gepfropften Hülle $d_2$ aus - jeweils bezogen auf $d_2$ -
   - $d_{21}$: 70 bis 90 Gew.-% einpolymerisierten Einheiten $d_{21}$ des Styrols und
   - $d_{22}$: 10 bis 30 Gew.-% einpolymerisierten Einheiten $d_{22}$ des (Meth)acrylnitrils,
   mit der Maßgabe, daß das Pfropfmischpolymerisat C einen mittleren Teilchendurchmesser von 0,2 bis 0,5 $\mu$m und das Pfropfmischpolymerisat D einen solchen von 0,4 bis 0,7 $\mu$m - jeweils bestimmt als $d_{50}$-Wert der integralen Masseverteilung - aufweist.

2. Formmasse nach Anspruch 1, enthaltend
   40 bis 80 Gew.-% A
   10 bis 50 Gew.-% B
   5 bis 20 Gew.-% C
   5 bis 20 Gew.-% D.

3. Formmasse nach Anspruch 1, deren Pfropfmischpolymerisat C einen $d_{50}$-Wert von 0,2 bis 0,4 $\mu$m und deren Pfropfmischpolymerisat D einen $d_{50}$-Wert von 0,4 bis 0,6 $\mu$m aufweist.

4. Formmasse nach Anspruch 1, enthaltend - bezogen auf 100 Gewichtsteile der Mischung aus $A + B + C + D$ - 0,1 bis 40 Gewichtsteile übliche Zusatzstoffe (Komponente E).

5. Verwendung der Formmasse gemäß Anspruch 1 bis 4 zur Herstellung von Formteilen.

**Claims**

1. A thermoplastic molding material containing (based on the sum of $A + B + C + D$)
   - A: from 20 to 80% by weight of a polycarbonate A,
   - B: from 10 to 60% by weight of a thermoplastic copolymer B of (based in each case on B)
   - $b_1$: from 70 to 90% by weight of polymerized units $b_1$ of styrene, of $\alpha$-methylstyrene or of a styrene alkylated in the nucleus and
   - $b_2$: from 10 to 30% by weight of polymerized units $b_2$ of (meth)acrylonitrile,

9

C: from 5 to 30% by weight of a graft copolymer C of (based in each case on C)

$c_1$: from 20 to 60% by weight of a polybutadiene rubber $c_1$ and

$c_2$: from 80 to 40% by weight of a shell $c_2$ which is grafted thereon and consists of (based in each case on $c_2$)

either

$c_{21}$: from 70 to 90% by weight of polymerized units $c_{21}$ of styrene and

$c_{22}$: from 10 to 30% by weight of polymerized units $c_{22}$ of (meth)acrylonitrile

or

$c_{23}$: from 15 to 40% by weight of polymerized units $c_{23}$ of styrene,

$c_{24}$: from 85 to 60% by weight of polymerized units $c_{24}$ of methyl methacrylate and

$c_{25}$: not more than 3% by weight of polymerized units $c_{25}$ of glycidyl methacrylate, and

D: from 5 to 30% by weight of a graft copolymer D of (based in each case on D)

$d_1$: from 20 to 60% by weight of a crosslinked acrylate rubber $d_1$ and

$d_2$: from 80 to 40% by weight of a shell $d_2$ which is grafted thereon and consists of (based in each case on $d_2$)

$d_{21}$: from 70 to 90% by weight of polymerized units $d_{21}$ of styrene and

$d_{22}$: from 10 to 30% by weight of polymerised units $d_{22}$ of (meth)acrylonitrile,

with the proviso that the graft copolymer C has a median particle diameter of from 0.2 to 0.5 $\mu$m and the graft copolymer D has one of from 0.4 to 0.7 $\mu$m, determined in each case as the $d_{50}$ value of the integral mass distribution.

2. A molding material as claimed in claim 1, containing
from 40 to 80% by weight of A,
from 10 to 50% by weight of B,
from 5 to 20% by weight of C and
from 5 to 20% by weight of D.

3. A molding material as claimed in claim 1, whose graft copolymer C has a $d_{50}$ value of from 0.2 to 0.4 $\mu$m and whose graft copolymer D has a $d_{50}$ value of from 0.4 to 0.6 $\mu$m.

4. A molding material as claimed in claim 1, containing from 0.1 to 40 parts by weight of conventional additives (component E) per 100 parts by weight of the mixture of A + B + C + D.

5. The use of a molding material as claimed in claim 1 or 2 or 3 or 4 for the production of moldings.

**Revendications**

1. Masse à mouler thermoplastique contenant - rapportés à la somme de A + B + C + D -

A : de 20 à 80% en poids d'un polycarbonate A;

B : de 10 à 60% en poids d'un polymère mixte thermoplastique B constitué par - chaque fois rapportés à B -

$b_1$ : de 70 à 90% en poids d'unités $b_1$ du styrène, de l'$\alpha$-méthylstyrène ou encore d'un styrène alkylé au noyau incorporées par polymérisation,

$b_2$ : de 10 à 30% en poids d'unités $b_2$ du (méth)acrylonitrile incorporées par polymérisation;

C : de 5 à 30% en poids d'un polymère mixte greffé C constitué par - chaque fois rapportés à C -

$c_1$ : de 20 à 60% en poids d'un caoutchouc de polybutadiène $c_1$

$c_2$ : de 80 à 40% en poids d'une enveloppe $c_2$ greffée sur ce dernier constituée - chaque fois rapportés à $c_2$ -

soit par

$c_{21}$ : de 70 à 90% en poids d'unités $c_{21}$ du styrène incorporées par polymérisation et

$c_{22}$ : de 10 à 30% en poids d'unités $c_{22}$ du (méth)acrylonitrile incorporées par polymérisation, soit par

$c_{23}$ : de 15 à 40% en poids d'unités $c_{23}$ du styrène incorporées par polymérisation,

$c_{24}$ : de 85 à 60% en poids d'unités $c_{24}$ du méthacrylate de méthyle incorporées par polymérisation et

$c_{25}$ : jusqu'à 3% en poids d'unités $c_{25}$ du méthacrylate de glycidyle incorporées par polymérisation;

D : de 5 à 30% en poids d'un polymère mixte greffé D constitué par - chaque fois rapportés à D -

$d_1$ : de 20 à 60% en poids d'un caoutchouc d'acrylate réticulé $d_1$

$d_2$ : de 80 à 40% en poids d'une enveloppe $d_2$ greffée sur ce dernier constituée par - chaque fois rapportés à $d_2$ -

$d_{21}$ : de 70 à 90% en poids d'unités $d_{21}$ du styrène incorporées par polymérisation et

$d_{22}$ : de 10 à 30% en poids d'unités $d_{22}$ du (méth)acrylonitrile incorporées par polymérisation,

avec cette mesure que le polymère mixte greffé C présente une granulométrie moyenne de 0,2 à 0,5 $\mu$m et le polymère mixte greffé D de 0,4 à 0,7 $\mu$m - chaque fois rapportés à la valeur $d_{50}$ de la répartition massique intégrale.

2. Masse à mouler selon la revendication 1, contenant
de 40 à 80% en poids de A
de 10 à 50% en poids de B
de 5 à 20% en poids de C
de 5 à 20% en poids de D.

3. Masse à mouler selon la revendication 1, dont le polymère mixte greffé C présente une valeur $d_{50}$ de 0,2 à 0,4 $\mu$m et dont le polymère mixte greffé D présente une valeur $d_{50}$ de 0,4 à 0,6 $\mu$m.

4. Masse à mouler selon la revendication 1, contenant - rapportées à 100 parties en poids du mélange constitué par A + B + C + D - de 0,1 à 40 parties en poids d'additifs habituels (composant E).

5. Utilisation de la masse à mouler selon les revendications 1 à 4 pour la fabrication d'éléments moulés.